# EUROPÄISCHE PATENTANMELDUNG

(11) **EP 2 530 126 A1**
(43) Veröffentlichungstag der Anmeldung: **05.12.2012**
(21) Anmeldenummer: 12170437.3
(22) Anmeldetag: 01.06.2012
(51) Int. Cl.: C09D 5/14, C23C 18/32, C23C 18/34

(54) **Beschichtung umfassend Ni-P-PTFE in Kombination mit einem polykationischen Polymer**

(30) Priorität: 01.06.2011 AT 8082011
(71) Anmelder: KE-KELIT Kunststoffwerk Gesellschaft m.b.H., 4020 Linz (AT)
(72) Erfinder: Zhao, Qi, Dundee, DD1 4HN (GB); Wang, Su, Dundee, DD2 5JA (GB); Xueju, Su, Dundee, DD1 4HN (GB); Slugovc, Christian, 9020 Klagenfurt (AT); Kienberger, Julia, 8010 Graz (AT)
(74) Vertreter: Hübscher, Helmut

(57) **Zusammenfassung**

Es wird eine Beschichtung mit antimikrobiellem Polymer vorgeschlagen, welches verbesserte Bakterienablöseeigenschaften aufweist, die sich durch eine Zusammensetzung aus Ni-P-PTFE in Kombination mit einem insbesondere quaternäre Aminfunktionalitäten aufweisenden polykationischen Polymer oder einem Polymer auszeichnet, das durch Protonierung kationisch geladene chemische Gruppen, insbesondere primäre, sekundäre oder tertiäre Amin-Funktionalitäten aufweist, wobei die ladungsbildende Funktionalität vorzugsweise ein integrierter Teil der Hauptkette oder der Seitenkette des Polymers ist und die Herstellung der Beschichtung vorzugsweise durch stromloses Plattieren erfolgt.

## Beschreibung

Zahlreiche Anwendungen verwenden Edelstahl als umgebendes Material in Kontakt mit wässrigen Medien. Das können Rohrleitungen und Rührkessel in der Lebensmittelindustrie sein, aber auch implantierte biomedizinische Instrumente, wie beispielsweise Katheter oder Stifte zur Knochenfixierung, die häufig aus Edelstahl gemacht sind. Allerdings kann der enge Kontakt zwischen solchen Komponenten und nicht-septischen Medien leicht zur Anhaftung von Bakterien führen. Dies kann in der Folge schwerwiegende Konsequenzen nach sich ziehen, die von kosten- und zeitaufwendigen Reinigungsprozeduren bis zu höchst gefährlichen Infektionen reichen.

Medizinische Vorrichtungen, die mit Gemischen, welche antimikrobielle Mittel enthalten, oder mit reinen antimikrobiellen Mitteln beschichtet sind, sind bereits bekannt. Die dafür verwendeten Wirkstoffe sind vor allem elementares Silber (in Nanopartikelform), Antibiotika (wie Minocyclin oder Rifampin) und Tenside. Für die Lebensmittelindustrie kommen als Reinigungsmittel am häufigsten Halogene, Peroxygene und Säuren zur Anwendung. Alle diese Desinfektionsmittel werden als Lösungen oder Schäume angewendet, sie leiden aber unter nachteiligen Auslaugeffekten. Bei einem anderen Verfahren wurden makromolekulare Biozide verwendet, die das Problem sehr wirksam zu lösen vermögen, da Kontakt-Biozid-Polymere nicht-volatil und chemisch stabil sind und keine Abbauprodukte mit niedrigem Molekulargewicht in die Umgebung abgeben. Die

Entwicklung synthetischer Polymere ebnet folglich den Weg zur Verbesserung der Biozid-Wirksamkeit und -selektivität bei gleichzeitiger Minimierung der schädlichen Nebenwirkungen, die mit herkömmlichen antimikrobiellen Mitteln oft einhergehen.

Die hohe Dichte der Ladungen auf der Oberfläche polykationischer Polymere ist verantwortlich für die elektrostatische Wechselwirkung mit der negativ geladenen Zellmembran des Mikroorganismus. Ein wechselseitiger Austausch der Gegenionen auf der Membran mit den Polykationen des Polymers führt zu einer Bindung der Phospholipidmembran und damit zu einer Phasentrennung geladener und ungeladener Lipide. Dies provoziert eine Freisetzung der Zellkonstituenten und eine Lyse der Zelle. Allerdings bringen diese polykationische Polymere auch Nachteile mit sich: Aufgrund der geladenen Oberfläche könnten Bakterienzellen, auch wenn sie bereits getötet sind, wegen elektrostatischer Wechselwirkungen zwischen dem positiv geladenen Polymer und der negativ geladenen äußeren Bakterienmembran auf dem Material bleiben. Selbst wenn also das Biozidmaterial seine Aufgabe erfüllt und zu einer Zerstörung der Bakterienmembran und zu einer Zelllyse führt, ist die Wahrscheinlichkeit hoch, dass die Bakterienfragmente als Ausgangsschicht für die anschließende Anhaftung lebensfähiger Zellen zur Bildung von Biofilmen dienen. Deshalb sind die erwähnten Methoden nicht geeignet, das Problem ausreichend zu lösen, da die Tötung von Bakterienzellen die Ausbildung von Biofilmen nicht verhindert. Es besteht folglich ein großes Interesse daran, Oberflächen zu finden, die tote und lebendige Bakterien ablösen. Da Bakterien geladene Partikel sind, ist die Oberflächenenergie die wichtigste physikalische Größe, die eingestellt werden muss, wenn Werkstoffe geschaffen werden sollen, die nicht zur Zellanhaftung neigen. In der erweiterten DLVO-Theorie werden die grundsätzlichen Wechselwirkungen zwischen einem Bakterium und einer Oberfläche in einem Fluid definiert. Die gesamte Interaktionsenergie zwischen diesen drei Teilnehmern ist die Summe der Lifshitz-van-der-Waals-Wechselwirkungen, der LewisSäure/Base-Interaktionen, elektrischer Doppelschicht-Interaktionen und der Brown'schen Molekularbewegung. Durch die Optimierung der Oberflächenpolarität mit dem Ziel einer Oberflächenenergie von 23,5 mN m⁻¹ kann die Bakterienanhaftung minimiert werden. Mit der Kombination des Ni-P-PTFE-Systems lässt sich eine minimale Bakterienadhäsion von 25 mN m⁻¹ erreichen. Die ersten Verbundstoffbeschichtungen von stromlosem (oder autokatalytischem) Nickel-Phosphor und Polytetrafluorethylen (PTFE) wurden vor ungefähr 20 Jahren eingeführt. Stromloses Nickel-Phosphor kommt in vielen Industriebranchen dank seiner Korrosions- und Verschleißfestigkeit sowie seiner inhärent gleichmäßigen Beschichtungsdicke häufig zur Anwendung. Die Einbringung von PTFE-Partikeln in die Ni-P-Matrix kann sich die unterschiedlichen Eigenschaften der Ni-P-Legierung und von PTFE zunutze machen. PTFE ist chemisch sehr träge und hat einen relativ hohen Schmelzpunkt (325°C). Sein Reibungskoeffizient ist geringer als der von beinahe allen anderen Polymeren. Aufgrund seiner extrem niedrigen Oberflächenenergie (18,6 mN/m) weist PTFE ausgezeichnete Antihaft-Eigenschaften auf. Die resultierenden Eigenschaften stromloser Ni-P-PTFE-Beschichtungen, nämlich die Antihaft-Eigenschaft, das Antiadhäsive, die geringere Reibung, die hohe Verschleiß- und Korrosionsfestigkeit, wurden in zahlreichen Industriezweigen erfolgreich genutzt. Es wurde gezeigt, dass Ni-P-PTFE-Beschichtungen die Bakterienadhäsion signifikant reduzieren.

Aufgabe der Erfindung ist es günstige Antihaft-Eigenschaften mit einem polykationischen Polymer zu kombinieren.

Die Erfindung löst diese Aufgabe durch eine Zusammensetzung aus Ni-P-PTFE in Kombination mit einem insbesondere quaternäre Aminfunktionalitäten aufweisenden polykationischen Polymer oder einem Polymer, das durch Protonierung kationisch geladene chemische Gruppen, insbesondere primäre, sekundäre oder tertiäre, Amin-Funktionalitäten aufweist, wobei die ladungsbildende Funktionalität vorzugsweise ein integrierter Teil der Hauptkette oder der Seitenkette des Polymers ist und die Herstellung der Beschichtung zur Erzielung verbesserter bakterieller Ablösungseigenschaften vorzugsweise durch stromloses Plattieren erfolgt. Es wurde gezeigt, dass eine modifizierte Formulierung für Ni-P-PTFE-Beschichtungen einschließlich eines polykationischen Polymers die Herstellung beschichteter Edelstahlproben ermöglicht, die ein weiter verringertes Haftprofil der Bakterien zeigen, verglichen mit herkömmlichen Edelstahlproben, die mit Ni-P-PTFE-Beschichtungen versehen sind. Die Beschichtung kann auf metallischen Stahl, insbesondere auf Edelstahl, und auf Kunststoff, insbesondere auf Acrylnitrilbutadienstyren, aufgebracht sein.

Verwendung findet einer erfindungsgemäße Beschichtung beispielsweise in der lebensmittelverarbeitenden Industrie, insbesondere für Arbeitsflächen in Kontakt mit Lebensmitteln, für Einrichtungen zur Lebensmittelaufbewahrung und zur Verwendung als Lebensmittelverpackung. Des Weiteren findet die Beschichtung Verwendung für medizinische Produkte, insbesondere für medizinische Geräte aus Edelstahl, wobei ein medizinisches Gerät der Definition der Richtlinie 93/42/EWG (Richtlinie des Europäischen Rats) entspricht und derartige Geräte vor allem Harnkatheter, Herzklappen, Stents, Schrittmacher sowie Stifte, Nägel und Drähte zur Knochenfixierung umfassen. Auch kann die Beschichtung vorteilhaft als Rohrbeschichtung für Brauchwasser, Kühlwasser und Trinkwasser sowie als Beschichtung zur Verwendung in sanitären Haushaltseinrichtungen und Wärmetauschern Verwendung finden.

Eine neue Beschichtung auf Basis der stromlosen Plattierung einer Ni-P-PTFE-Formulierung mit einem polykationischen Polymer oder einem entsprechenden Vorläufer eines polykationisches Polymer wird dargestellt. Die neuartige Beschichtung ist durch eine signifikant reduzierte Zellhaftung im Vergleich zu herkömmlichen Ni-P-PTFE-Beschichtungen gekennzeichnet.

PTFE-Partikel, die in die Ni-P-Legierung eingebracht sind, verbinden bereits die günstigen Eigenschaften von Ni-P und PTFE. Es wurde gezeigt, dass dieses System herabgesetzte Zellhaftungseigenschaften bewirkt. Die Ablösung bakterieller Zellen lässt sich indessen weiter steigern, wenn diese bekannte Formulierung durch die Implementierung eines polykationischen Polymers oder Vorläufers für das entsprechende Polymer verbessert wird.

Die Vorbehandlungs- und Beschichtungsverfahren für stromlose, polykationische Ni-P-PTFE-Polymerbeschichtungen sind in Tabelle 1 aufgelistet. Die Betriebsparameter und Beschichtungsbedingungen stromloser, polykationischer Ni-P-PTFE-Polymerbeschichtungen sind in Tabelle 2 aufgelistet. Typischerweise sind die Konstituenten der polykationischen Ni-P-PTFE-Polymerlösung unter sauren Bedingungen zusammengesetzt aus einer Nickelionen-Quelle (z.B. NiSO₄·6H₂O), einem Reduktionsmittel (z.B. NaH₂PO₂·H₂O), Komplexbildnern (z.B. Na₃C₆H₅O₇·2H₂O oder H₃C₆O₇·6H₂O), Puffermitteln (z.B. CH₃COONa) und Stabilisatoren (z.B. (NH₂)₂CS). Eine 60% PTFE-Emulsion von Aldrich mit einer Partikelgröße im Bereich von 0,05 bis 0,5 µm wird verwendet. Einige Polymerpartikel (z.B. PTFE) koagulieren und präzipitieren in der Plattierungslösung leicht, wenn sie wasserabstoßend sind. Ein kationisches Tensid FC-4 (C₂₀H₂₀F₂₃N₂O₄I) dient zur Suspendierung von PTFE-Partikeln. Das polykationische Material wird im geladenen Zustand eingeführt oder (teilweise) im gesamten stromlosen Beschichtungsverfahren protoniert.

Vorbehandlungsverfahren werden wie in Tabelle 1 beschrieben durchgeführt. Die Beschichtungszusammensetzung ist in Tabelle 2 angegeben. In diesem Beispiel ist der Vorläufer (Präkursor) des polykationischen Polymers (PCP) ein Co-Polynorbornen-Ester. Strukturunterschiede werden durch variable Anteile der hydrophilen und hydrophoben Seitengruppen bewirkt. Während des gesamten in einer sauren Umgebung ablaufenden Beschichtungsprozesses werden über eine Teil-Protonierung Ladungen eingeführt. Ni-P-PTFE-PCP1 und Ni-P-PTFE-PCP2 werden hergestellt. Ni-P und zwei Typen von Ni-P-PTFE-Beschichtungen (Ni-P-PTFE1 und Ni-P-PTFE2) werden zu Vergleichszwecken ebenfalls hergestellt. In Abbildung 1 ist die Adhäsion von *Escherichia coli* auf den Beschichtungen dargestellt. Edelstahl und Ni-P-Beschichtungen werden zur Kontrolle verwendet. Die Implementierung eines polykationischen Polymers führt zu Verbesserungen im Vergleich zu Edelstahl- und Ni-P-Beschichtungen. Eine Bakterienreduzierung um 92% im Vergleich zu Edelstahl wurde mit Bezug auf *E. coli* festgestellt. In Abbildung 2 ist die Adhäsion von *Staphylococcus aureus* auf den Beschichtungen dargestellt. Die Ergebnisse waren identisch. Ni-P-PTFE-PCP1 und Ni-P-PTFE-PCP2 haben am besten abgeschnitten und die Bakterienanhaftung um 86% im Vergleich zu Edelstahl reduziert.

### Schemata und Tabellen

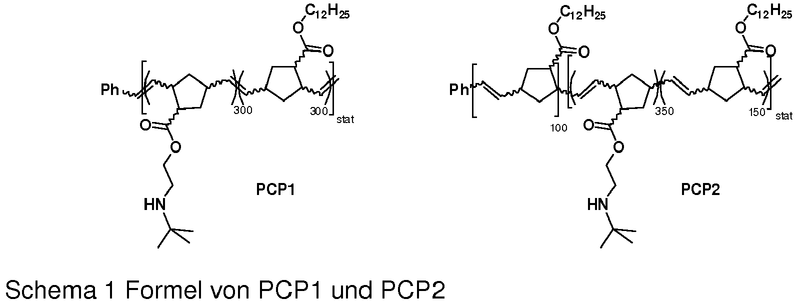

**Tabelle 1 Vorbehandlungsverfahren von Metallsubstraten für stromlose Beschichtungen**

| Verfahren | Badzusammensetzung und Betriebsbedingungen |
|---|---|
| Alkalische Reinigung | NaOH: 20 - 35 g/l; Na₃PO₄: 25 - 35 g/l; Na₂CO₃: 25 - 30 g/l; Na₂SiO₃: 5 - 10 g/l; 60 - 80 °C; 5 - 10 Min. |
| Spülen | H₂O; Raumtemperatur |
| Elektroreinigung | NaOH: 20 - 35 g/l; Na₃PO₄: 25 - 35 g/l; Na₂CO₃: 25 - 30 g/l; Na₂SiO₃: 5 - 10 g/l;Raumtemperatur; 2 - 3 Min; Spannung: 5 - 7 V. |
| Spülen | H₂O; Raumtemperatur |
| Beizen | HCl (30%):H₂O=1:1; Raumtemperatur, 0,5 - 1 Min. |
| Aktivierung | NiCl₂·6H₂O:200 - 400 g/l; HCl (30%):75 - 200 ml/l; Anodenplatten: Ni; Stromdichte: 2-3 A/dm²;Raumtemperatur; 1-3 Min. |

**Tabelle 2 Badzusammensetzung und Betriebsbedingungen für stromloses Ni-P-PTFE-polykationisches Polymer**

| | | | |
|---|---|---|---|
| NiSO₄·6H₂O: | 20-30 g/l | NaH₂PO₂ H₂O: | 25-35 g/l |
| H₃C₆H₅O₇·6H₂O: g/l | 20 -25 | CH₃COONa: | 20-25 g/l |
| PTFE(60 Gew.-%) : ml/l | 1-50 | Inhibitor (z.B. (NH₂)₂CS oder Pb usw.) 1 ppm | |
| | | Tensid: | 0 - 1,0 g/l |
| polykationischen Polymer oder Vorläufer: | 1-20 ml/l | z.B.: C₂₀H₂₀F₂₃N₂O₄I; oder CH₃(CH₂)₁₅N(Br)(CH₃)₃ oder (C₂H₄O)ₙ ·C₁₅H₂₄O | |
| pH: | 4,6-5,5 | Temperatur: | 86-93°C |

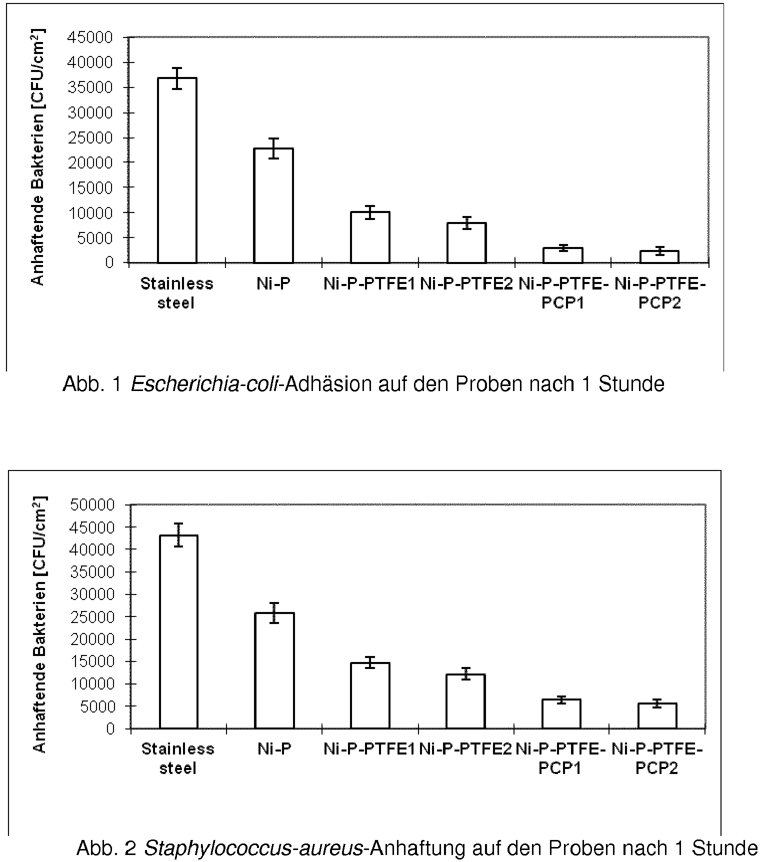

### Referenzen

Cook, G.; Costerton, J. W.; Darouiche R. O. Int J Antimicrob Ag 2000;13:169-73. Lai, K. K.: Fontecchio S. A. Am J Infect Control 2002;30:221-5.
Knetsch, M. L. W.; Koole, L. H. Polymers 2011, 3340-366.
Klibanov, A. M. Jour Mater Chem 2007, 17, 2479-2482
Kenawy, E.-R.; Worley S. D., Broughton R. Biomacromolecules, 2007, 1359-1384.
Zhao, Q., Liu, Y, Müller- Steinhagen, H.; Liu, G. Surf Coat Tech 2002, 155, 279-284.
Zhao, Q., Wang, C., Liu, Y., Wang, S, Int Journ Adhes Adhese 2007, 2, 85-91. Liu, W., Fryer, PJ.; Zhang, Z.; Zhao, Q.; Liu, Y. Innovative Food Science und Emerging Technologies 2006, 7, 263-269. Zhao, Q., Liu, Y. J Food Eng 2006, 72, 266-272. Zhao, Q., Liu, Y.; Wang, S.; Müller-Steinhagen, H. Chem Eng Sci 2005, 60, 4858-4865. Zhao, Q.Surf Coat Tech 2004, 185, 199-204
Kreutzwiesner, E.; Noormofidi, N.; Wiesbrock, F.; Kern, W.; Rametsteiner, K.; Stelzer, F.; Slugovc, C. J. Polym. Sci. Part A: Polym. Chem. 2010, 48, 4504-4514.

## Patentansprüche

1. Beschichtung mit antimikrobiellem Polymer, **gekennzeichnet durch** eine Zusammensetzung aus Ni-P-PTFE in Kombination mit einem insbesondere quaternäre Aminfunktionalitäten aufweisenden polykationischen Polymer oder einem Polymer, das **durch** Protonierung kationisch geladene chemische Gruppen, insbesondere primäre, sekundäre oder tertiäre, Amin-Funktionalitäten aufweist, wobei die ladungsbildende Funktionalität vorzugsweise ein integrierter Teil der Hauptkette oder der Seitenkette des Polymers ist und die Herstellung der Beschichtung vorzugsweise **durch** stromloses Plattieren erfolgt.

2. Beschichtung gemäß Anspruch 1, **dadurch gekennzeichnet, dass** diese auf metallischem Stahl, insbesondere auf Edelstahl, und/oder auf Kunststoff, insbesondere auf Acrylnitrilbutadienstyren, aufgebracht ist.

3. Verwendung der Beschichtung gemäß Anspruch 1 oder 2 zur Installation der entsprechenden Beschichtung in der lebensmittelverarbeitenden Industrie, insbesondere für Arbeitsflächen in Kontakt mit Lebensmitteln, für Einrichtungen zur Lebensmittelaufbewahrung und zur Verwendung als Lebensmittelverpackung.

4. Verwendung der Beschichtung gemäß Anspruch 1 oder 2 für medizinische Produkte, insbesondere für medizinische Geräte aus Edelstahl, wobei derartige Geräte vor allem Harnkatheter, Herzklappen, Stents, Schrittmacher sowie Stifte, Nägel und Drähte zur Knochenfixierung umfassen.

5. Verwendung der Beschichtung gemäß Anspruch 1 oder 2 als Rohrbeschichtung für Brauchwasser, Kühlwasser und Trinkwasser sowie als Beschichtung zur Verwendung in sanitären Haushaltseinrichtungen und Wärmetauschern.
